## Europäisches Patentamt

## European Patent Office

## Office européen des brevets

(19)

(11) Veröffentlichungsnummer: **0 223 910**
**B1**

(12) **EUROPÄISCHE PATENTSCHRIFT**

(45) Veröffentlichungstag der Patentschrift:
**03.10.90**

(51) Int. Cl.⁵: **G01J 3/52**

(21) Anmeldenummer: **86109058.7**

(22) Anmeldetag: **03.07.86**

(54) Anzeigegerät zur Darstellung von Farbmischungen.

(30) Priorität: **25.10.85 DE 3537990**
**22.10.85 DE 8529913 U**

(43) Veröffentlichungstag der Anmeldung:
**03.06.87 Patentblatt 87/23**

(45) Bekanntmachung des Hinweises auf die Patenterteilung:
**03.10.90 Patentblatt 90/40**

(84) Benannte Vertragsstaaten:
**AT BE CH DE FR GB IT LI LU NL SE**

(56) Entgegenhaltungen:
**DE-B- 1 262 148**
**DE-C- 123 819**
**DE-C- 568 995**
**US-A- 2 240 053**
**US-A- 2 522 723**

(73) Patentinhaber: **von Loesch, Hans, Waldfriedstrasse 24, D-6000 Frankfurt/Main 1(DE)**
Patentinhaber: **Riehle, Harald, Gottlieb-Wolfer-Strasse 6, D-7306 Denkendorf(DE)**

(72) Erfinder: **von Loesch, Hans, Waldfriedstrasse 24, D-6000 Frankfurt/Main 1(DE)**
Erfinder: **Riehle, Harald, Gottlieb-Wolfer-Strasse 6, D-7306 Denkendorf(DE)**

(74) Vertreter: **Dreiss, Uwe, Dr. jur. Dipl.-Ing. M.Sc. et al, Patentanwälte Dreiss, Hosenthien & Fuhlendorf Gerokstrasse 6, D-7000 Stuttgart 1(DE)**

**Beschreibung**

Die Erfindung geht aus von einem Anzeigegerät zur Darstellung von Farbmischungen gemäß der US-A 2 240 053.

Bei einem derartigen Anzeigegerät weisen die verschiedenen zueinander verdrehbaren Farbscheiben, die in Abstufungen zunehmender Intensität je mit einer Farbe bedruckt sind, je eine Öffnung ("matching hole") auf. Mit diesen in den einzelnen Farbscheiben vorgesehenen Öffnungen ist die gleichgroße Öffnung (9) in der auf der Rückseite vorgesehenen Deckscheibe ausgerichtet, während die Deckscheibe auf der Vorderseite ein deutlich größeres Fenster (4) aufweist. Durch das Fenster (4), durch die matching holes in den Farbscheiben und durch die gleichgroße Öffnung in der Rückseite kann eine farbige Unterlage direkt, d.h. ohne zusätzliche Färbung betrachtet und mit der eingestellten Farbmischung außerhalb der matching holes, wie sie sich gegen den weißen Hintergrund der Deckscheibe auf der Rückseite darstellt, verglichen werden.

Damit ist es nicht möglich gleichzeitig nebeneinander eine farbige Unterfläche (1) neutral, d.h. direkt ohne Farbmischung und (2) räumlich daneben eine bestimmte Farbmischung über derselben Unterlage, d.h. die eingestellte Farbmischung additiv zur Unterlage, zu betrachten. Letzteres ist z.B. der Fall, wenn man zu einer Farbe auf einer Vorlage, die man durch den nicht bedruckten Bereich direkt im Blickfeld hat, eine weitere Farbmischung addieren und die Farbe der Vorlage mit und ohne addierter Farbmischung gleichzeitig im Fenster auf der Vorderseite im Blick haben möchte. Bei dem Anzeigegerät nach der US-A 2 240 053 geht dies nicht, weil die Öffnung in der Deckscheibe auf der Rückseite nicht größer ist als die "Matching holes" in den einzelnen Farbscheiben. Man sieht die gemischten Farben also stets gegen den Hintergrund der Rückscheibe, nicht gegen den Hintergrund einer Vorlage. Außerdem sind bei der US-A 2 240 053 die Vorder- und Rückscheibe nicht miteinander verbunden, so daß eine gegenseite Verdrehung beider und der Farbscheiben nicht verhindert werden kann. Dies macht die Handhabung außerordentlich schwierig.

Aufgabe der Erfindung ist es demgemäß, ein Farbanzeigegerät, wie es aus der US-PS 2 240 053, bekannt geworden ist, so weiterzubilden, daß als zusätzliche Betrachtungsmöglichkeit die gleichzeitige Betrachtung einer Farbunterlage durch die nicht mit Farbe bedruckten Bereiche der Farbscheiben hindurch neben einer Betrachtung der mit Farbe bedruckten Bereiche gegen den Hintergrund derselben Farbunterlage gegeben ist.

Erfindungsgemäß wird diese Aufgabe durch die im Patentanspruch 1 genannten Merkmale gelöst.

Diese Lösung unterscheidet sich von dem vorbekannten Anzeigegerät dadurch, daß die Aussparungen in den beiden Deckscheiben auf der Vorderseite und der Rückseite des Gerätes sowohl einen nicht mit Farbe bedruckten Bereich der Farbscheiben als auch einen bedruckten Bereich der Farbscheiben umfassen, und die auf Rückseite eine mit einem Fenster versehene Platte schwenkbar vorgesehen ist.

In der ersten Schwenkstellung der Platte, in der sie vollkommen aus dem Bereich der Aussparung herausgeklappt ist, kann eine Farbunterlage durch die unbedruckten Bereiche der Farbscheiben hindurch direkt und daneben durch die bedruckten Bereiche additiv mit einer eingestellten Farbmischung betrachtet werden. In der zweiten Stellung, in der die Platte hinter die Aussparung auf der Rückseite geklappt ist und das Fenster in der Platte lediglich die nicht bedruckten Bereiche freigibt, kann durch die unbedruckten Bereiche hindurch die Farbmischung direkt und daneben in dem bedruckten Bereich gegen den Hintergrund der vorgeschwenkten Platte betrachtet werden. Die letztgenannte Möglichkeit entspricht im wesentlichen der Betrachtungsweise nach der US-A 2 240 053; die erstgenannte Betrachtungsmöglichkeit kommt bei dem erfindungsgemäßen Anzeigegerät noch als Alternative hinzu.

Ein Ausführungsbeispiel der Erfindung wird im folgenden unter Bezugnahme auf die beigefügten Zeichnungen beschrieben. Es stellen dar:

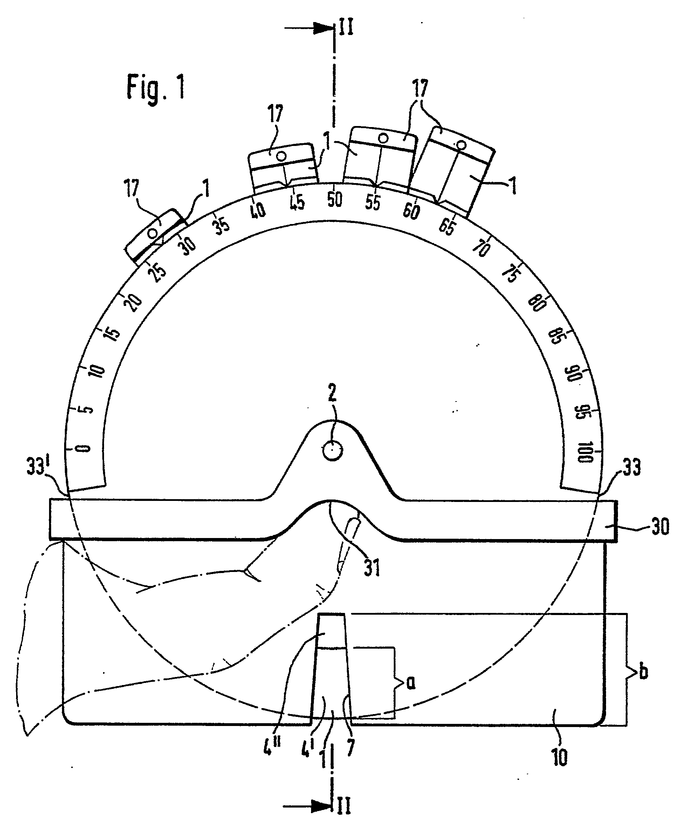

Figur 1 eine Draufsicht auf das Anzeigegerät;
Figur 2 einen Schnitt entlang der Linie II-II in Figur 1;
Figur 3a eine Draufsicht auf eine Scheibe 1;
Figur 3b einen Schnitt entlang der Linie IIIb-IIIb in Fig. 3a;
Figur 4 eine Rückansicht des Anzeigegerätes;
Figur 5 ein zweites Ausführungsbeispiel;
Figur 6 eine Draufsicht auf das zweite Ausführungsbeispiel.

Das Ausführungsbeispiel wird gebildet durch mehrere Farbscheiben. Sie werden durch Trägerfolie 1 und Farbfolie 4 gebildet. Zwischen den Farbscheiben 1, 4 sind Papierscheiben 14 angeordnet. Beidseitig der Scheibenanordnung 5 sind zur Abdeckung weitere Scheiben 6 bzw. 10 vorgesehen. Durch die Mitte der Scheiben jeweils hindurch geht ein Niet 2, um welches die Farbscheiben 1, 4 drehbar sind. Die Trägerfolien 1 sind am Umfang mit Laschen 17 versehen, um sie voneinander unabhängig und gegeneinander um den Niet 2 drehen zu können.

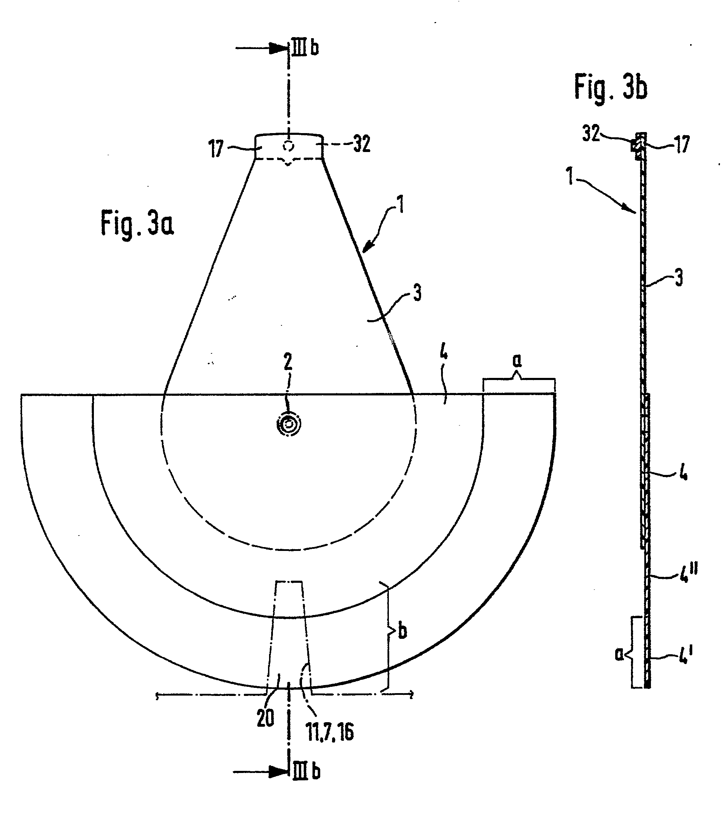

Wie aus Fig. 3b zu ersehen ist auf der Trägerfolie 1, die Farbfolie 4 aufgebracht. Die Trägerfolie 1 ist relativ kräftig ausgebildet; die Farbfolie 4 ist dünner und hat etwa halbkreisförmige Form. Sie ist mit zwanzig Sichtfeldern 20 bedruckt. Die Sichtfelder 20 sind jeweils für jede Scheibe 1 mit einer bestimmten Farbe in verschiedenen Farbabstufungen bedruckt, wobei sich z.B. bei Rasterdruck die Rasterdichte von Sichtfeld zu Sichtfeld um je 5% erhöht, so daß mit 20 Feldern eine Farbe insgesamt von 0 bis 100% Mischungsanteil zur Verfügung steht. Die 4 Scheiben 1 sind jeweils mit verschiedenen Farben, nämlich gelb, rot, blau, grau in verschiedenen Farbabstufungen bedruckt, so daß auf diese Weise durch Verstellung der Scheiben gegeneinander an einer bestimmten Stelle eine beliebige Mischung dieser 4 Farben eingestellt werden kann.

Die beiden Scheiben 6 und 10, die beidseitig die Scheibenanordnung 5 abdecken, weisen Aussparungen 7 bzw. 11 auf, deren Lage im Verhältnis zu einer Farbscheibe 1 in Figur 3a gestrichelt angedeutet ist, so daß die eingestellte Farbkombination durch Aussparungen 7 und 11, sowie entsprechende Aussparungen 16 in den Papierscheiben 14 hindurch betrachtet werden kann.

Die Farbfolien 4 sind nicht entlang ihrer ganzen in den Aussparungen 7, 11 sichtbar werdenden Erstreckung in radialer Richtung bedruckt, sondern lediglich entlang einer Teiles 4', der radial die Strecke a umfaßt. a ist kleiner als b und b bezeichnet radial die gesamte Erstreckung der Aussparungen 7, 11. Dies hat zur Folge, daß in den Aussparungen 7, 11 (und 16) nur im Bereich 4' die durch die verschiedene Drehstellung der Farbscheiben 1 erzielte Farbmischung und im Bereich 4" daneben die nicht von Farbe bedruckten transparenten Trägerfolien 4 betrachtbar sind. Nebeneinander können somit in den Aussparungen 7, 11 die Farbscheiben und somit deren Mischung und die nicht mit Farbe bedruckten Trägerfolien übereinander liegend betrachtet werden. Unmittelbar angrenzend an das durch Farbmischung entstehende Feld 4' erscheint ein Feld 4" mit farblosen durchscheinenden Folien 4, ohne Farbauflage.

Möchte man auf einer bestimmten Farbunterlage eine bestimmte Farbe betrachten und eine dazu passende Farbmischung mit den Farbscheiben 1 einstellen, sieht man sie durch die Farbfolien 4 hindurch einmal mit und einmal ohne Farbauflage, so daß bei der vergleichenden Betrachtung die Farbverfälschung und/oder -absorption durch die transparenten Farbfolien selbst, kompensiert wird. Man vermeidet damit, daß bei vergleichender Betrachtung die Farbmischung, die durch die Farbscheiben 1 eingestellt wird, in der Betrachtung durch die (unerwünschte) Eigenfärbung bzw. -absorption des Materials, aus dem die Farbfolien hergestellt sind, beeinflußt wird.

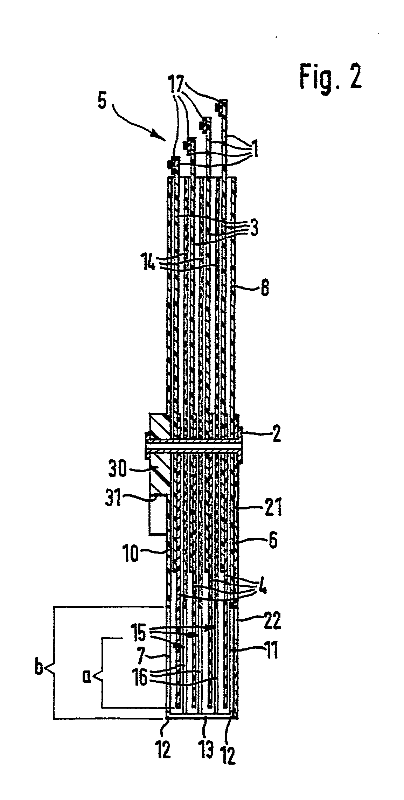

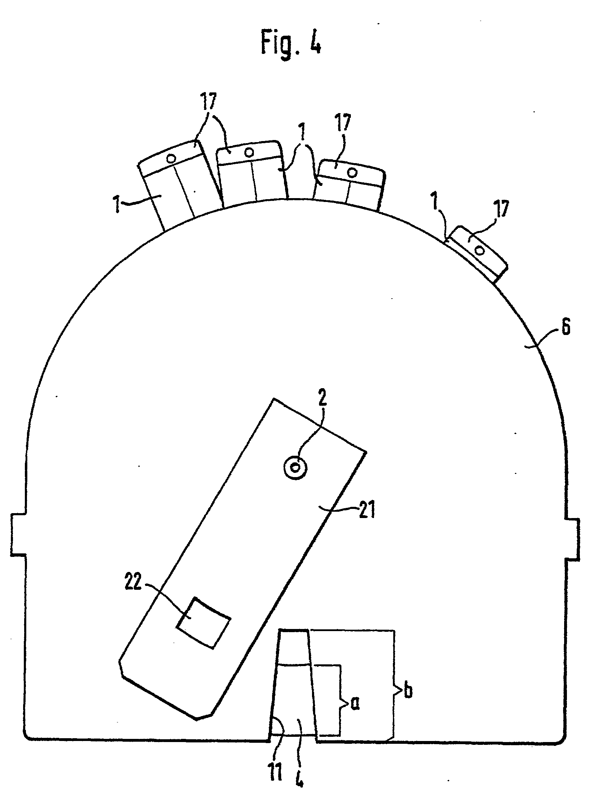

Auf der Rückseite der Farbscheiben ist auf der Scheibe 6 eine Platte 21 angebracht. Sie ist ebenfalls um den Niet 2 schwenkbar. Sie weist ein Fenster 22 auf. Wird sie vor die Ausnehmungen 7, 11 geschwenkt (also von der in Figur 4 gezeigten in eine senkrechte senkrechte Position), dann deckt sie bei der Betrachtung von vorne (von links in Fig. 2) den mit Farbe bedruckten Bereich 4' der Farbfolien 4 von hinten ab. Ist die Platte 21 selbst aus reinweißem Material, so ist auch die Abdeckung der farblichen Bedruckung der Farbfolien 4 somit von hinten reinweiß abgedeckt. Daneben bleiben die Aussparungen 7, 11 durch das Fenster 22 hindurch sichtbar, so daß durch die nicht mit Farbauflage bedruckten Bereiche der Folien 4 hindurch ein beliebiger Farbuntergrund betrachtet werden kann. Hinter der Platte 21 können weitere Farbfolien zur additiven Zumischung eingeschoben werden.

Auf der vorderen Scheibe 10, die zur Abdeckung der Farbscheiben dient, ist eine Griffleiste 30 angebracht. Wie durch die gestrichelte Hand angedeutet, kann man so das gesamte Anzeigegerät sicher in der Hand halten und auf einer Unterlage auch in Nuancen leicht führen, wobei der Daumen in die Mulde 31 eingreift. Die symmetrische Ausbildung ermöglicht sowohl für Rechts- als auch für Linkshänder gleichermaßen geeignete Handhabbarkeit.

Die Laschen 17 sind mit Griffelementen 32 versehen. Dadurch können die flach auf der zu beurteilenden Fläche liegende Farbscheiben 1, 4 mit den Fingerspitzen leicht verdreht werden.

Die Scheiben 6 und 10, die beidseitig die Farbscheiben abdecken, sind entlang des äußeren Randes etwa bis zu den mit 33 bzw. 33' bezeichneten Stellen miteinander verbunden. Diese Verbindungsstellen stellen einen Anschlag für die Laschen 17 dar, so daß die verdrehbaren Farbscheiben 1, 4 nur innerhalb eines Halbkreises verdreht werden können. Ergänzend kann man das Anzeigegerät gemäß der Erfindung derart weiterbilden, daß die Farbscheiben 4 ausgewechselt werden können. Die Farbscheiben 6 und 10 sind entlang ihrer Kanten 12 durch Stege 13 verbunden.

Die oberste Scheibe 10 muß in der Umgebung der Aussparungen 11 eine mattschwarze Farbgebung aufweisen, damit eine möglichst neutrale und überstrahlungsfreie Beurteilung des Farbfeldes in der Aussparung 7, 11 ermöglicht wird.

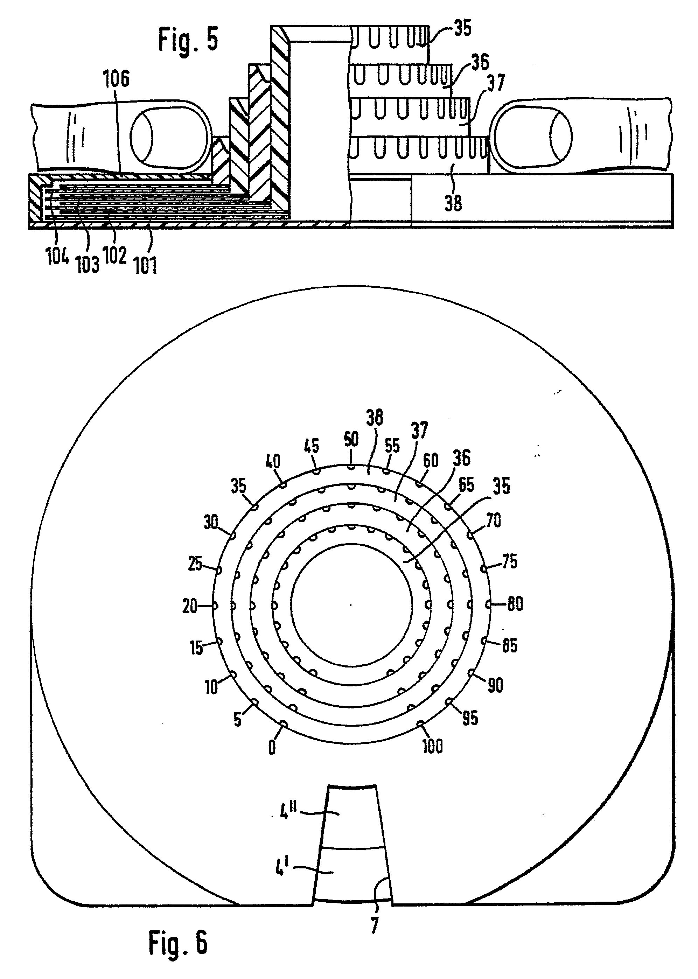

Fig. 5 und 6 zeigen ein weiteres Ausführungsbeispiel im Querschnitt (Fig. 5) und in der Draufsicht (Fig. 6) bei dem die Farbscheiben 101, 102, 103, 104 in der Mitte mit Naben 35, 36, 37, 38 versehen sind, die jeweils verschieden hoch sind und mit ihren Innendurchmessern derart aufeinander abgestimmt sind, daß sie ineinander gesteckt werden können. Man kann die Scheiben zueinander dadurch verdrehen, daß man von außen die Naben anfaßt und einzeln gegeneinander verdreht. Die Abdeckung der gesamten Scheibenanordnung nach oben erfolgt über eine obere Abdeckscheibe 106.

## Patentansprüche

1. Anzeigegerät zur Darstellung von Farbmischungen mit mehreren zueinander konzentrisch angeordneten, gegeneinander verdrehbaren Farbscheiben (1, 4) aus transparentem Material, die jeweils entlang des Umfangs über einen bestimmten radialen Bereich (4') in Abstufungen verschiedener Intensität mit unterschiedlichen Farben bedruckt und auf der Vorderseite und auf der Rückseite mit je einer Deckscheibe (6, 10) aus nichttransparentem Material abgedeckt sind, dadurch gekennzeichnet, daß die Deckscheiben (6, 10) je eine Aussparung (7, 11) zur Betrachtung eines Segments des bedruckten radialen Bereichs (4') und eines sich in radialer Richtung an diesen Bereich (4') anschließenden unbedruckten Bereichs (4") der Farbscheiben (1, 4) aufweisen und seitlich der Aussparungen (7, 11) durch einen Steg (13) verbunden sind, und daß auf der Rückseite (6) eine mit einem Fenster (22) versehene Platte (21) schwenkbar angeordnet ist, wobei in einer Stellung das Fenster (22) die Sicht durch den unbedruckten Bereich (4") freigibt und der restliche Teil der Platte (21) den bedruckten Bereich (4') abdeckt.

2. Anzeigegerät nach Anspruch 1, dadurch gekennzeichnet, daß die Farbwerte jeder Farbscheibe (1, 4) von einem Kreissektor (20) der Farbscheibe zum benachbarten Kreissektor der Farbscheibe (1, 4) in definierten Abstufungen von 5% variieren.

3. Anzeigegerät nach Anspruch 1 oder einem der folgenden, dadurch gekennzeichnet, daß jeweils zwischen zwei Farbscheiben (1, 4) eine drehfest angeordnete Papierscheibe (14) vorgesehen ist.

4. Anzeigegerät nach Anspruch 1, dadurch gekennzeichnet, daß auf der vorderen Deckscheibe (10) eine Griffleiste (30) vorgesehen ist, die eine Mulde (31) zur Fingerabstützung bei der Handhabung aufweist und rechts-/linkssymmetrisch ausgebildet ist.

5. Anzeigegerät nach Anspruch 1 oder einem der folgenden, dadurch gekennzeichnet, daß die Farbscheiben (1, 4) Laschen (17) mit Griffelementen (32) zum Erfassen und Verdrehen der Farbscheiben (1, 4) aufweisen.

6. Anzeigegerät nach einem der Ansprüche 1 bis 5, dadurch gekennzeichnet, daß die Farbscheiben (101-104) in ihrer Mitte mit konzentrisch ineinander angeordneten Naben (35-38) verschiedener Länge versehen sind, die als Drehleisten ausgebildet sind.

## Claims

1. A display device for the representation of colour mixtures comprising a plurality of colour discs (1, 4) of transparent material, which are arranged concentrically relative to each other and which are rotatable relative to each other and which are printed with different colours along their periphery over a given radial region (4') in steps of different intensity and which are covered on their front side and their rear side with a respective cover disc (6, 10) of non-transparent material characterised in that the cover discs (6, 10) each have an opening (7, 11) for viewing a segment of the printed radial region (4') and an unprinted region (4'') of the colour discs (1, 4), which unprinted region adjoins said region (4') in a radial direction, and the cover discs are connected laterally of the openings (7, 11) by a limb portion (13), and that a plate (21) provided with a window (22) is pivotably arranged on the rear side (6), wherein in one position the window (22) permits a view through the unprinted region (4'') and the remaining part of the plate (21) covers over the printed region (4').

2. A display device according to claim 1 characterised in that the colour values of each colour disc (1, 4) vary from one sector (20) of the circle of the colour disc to the adjacent sector of the colour disc (1, 4) in defined steps of 5%.

3. A display device according to claim 1 or one of the following claims characterised in that a respective non-rotatably disposed paper disc (14) is provided between each two colour discs (1, 4).

4. A display device according to claim 1 characterised in that provided on the front cover disc (10) is a gripping bar (30) which has a recess (31) for finger support in handling of the device and which is of a right/left symmetrical configuration.

5. A display device according to claim 1 or one of the following claims characterised in that the colour discs (1, 4) have tabs (17) with gripping elements (32) for gripping and turning the colour discs (1, 4).

6. A display device according to one of claims 1 to 5 characterised in that the colour discs (101–104) are provided in their centre with hubs (35–38) of different lengths, which are arranged concentrically one within the other and which are in the form of rotary bars.

## Revendications

1. Appareil indicateur pour la représentation de mélanges de couleurs, avec plusieurs écrans colorés (1, 4) concentriques, en matériau transparent, pouvant être entraînés en rotation les uns par rapport aux autres, dont chacun est imprimé, sur une zone (4') radiale déterminée de sa circonférence, avec des couleurs différentes, dont les intensités carient graduellement, la face avant et la face arrière étant recouvertes chacune par un écran de couverture (6, 10) en matériau non transparent, caractérisé en ce que les écrans de couverture (6, 10) présentent chacun une encoche (7, 11) pour l'observation d'un segment de la zone (4') radiale, imprimée et d'une zone (4'') non imprimée des écrans colorés (1, 4), qui est adjacente en direction radiale à cette zone (4'), et que latéralement, les encoches (7, 11) sont reliées entre elles par une bride (13), et que sur la face arrière (6), il est prévu une plaque (21) montée en pivotement, munie d'une fenêtre (22), par suite de quoi, dans une position donnée, la fenêtre (22) permet de voir à travers la partie non colorée (4'') et la partie restante de la plaque (21) recouvre la zone colorée (4').

2. Appareil indicateur selon la revendication 1, caractérisé en ce que les composantes trichromatiques de chaque écran coloré (1, 4) varient, d'un secteur (20) de l'écran coloréau secteur voisin de l'écran coloré (1, 4) par gradations définies, de 5%.

3. Appareil indicateur selon la revendication 1 ou l'une des suivantes, caractérisé en ce qu'entre deux écrans colorés (1, 4) il est prévue chaque fois un disque en papier (14) non rotatif.

4. Appareil indicateur selon la revendication 1, caractérisé en ce que sur l'écran de couverture (10), il est prévu une poignée de préhension (30) qui présente une cavité (31) pour l'appui d'un doigt lors de la manipulation et qui est conçue avec une symétrie gauche/droite.

5. Appareil indicateur selon la revendication 1 ou l'une des suivantes, caractérisé en ce que les écrans colorés (1, 4) présentent des oreilles (17) avec des éléments de préhension (32) pour saisir et faire tourner les écrans colorés (1, 4).

6. Appareil indicateur selon l'une quelconque des revendications 1 à 5, caractérisé en ce que les écrans colorés (101-104) sont munis en leur centre de moyeux (35-38) de différentes longueurs, disposés de façon concentrique les uns dans les autres, qui sont conçus comme des tringles de rotation.

Fig. 1

Fig. 2

Fig. 3a

Fig. 3b

Fig. 4

Fig. 5

Fig. 6